# EUROPEAN PATENT SPECIFICATION

(11) **EP 3 382 296 B1**
(45) Date of publication and mention of the grant of the patent: **09.12.2020**
(21) Application number: 17192001.0
(22) Date of filing: 20.09.2017
(51) Int. Cl.: F24F 13/20, F24F 13/30, F24F 1/32, F24F 1/00, F24F 1/0007, F24F 1/0057

(54) **INDOOR UNIT FOR AIR CONDITIONER**
INNENEINHEIT FÜR EINE KLIMAANLAGE
UNITÉ D'INTÉRIEUR POUR CLIMATISEUR

(30) Priority: 31.03.2017 KR 20170041815
(43) Date of publication of application: 03.10.2018
(73) Proprietor: LG ELECTRONICS INC., Yeongdeungpo-Gu Seoul 07336 (KR)
(72) Inventor: HONG, Seokpyo, 08592 Seoul (KR); PARK, Seokcheong, 08592 Seoul (KR)
(74) Representative: Vossius & Partner Patentanwälte Rechtsanwälte mbB

(56) References cited:
- EP-A1- 1 795 821
- CN-U- 203 083 220
- CN-U- 203 231 437
- JP-A- H10 238 800
- JP-A- 2014 167 376
- JP-U- S52 100 353
- KR-A- 20030 074 232
- KR-B1- 101 545 534

## Description

### BACKGROUND

The present disclosure relates to an indoor unit for an air conditioner. Further it relates to an air conditioner having an indoor unit.

Air conditioners refer to apparatuses that cool or heat an indoor space by using a refrigeration cycle. The refrigeration cycle includes a compressor, a condenser, an expander, and an evaporator. The compressor, the condenser, the expander, and the evaporator are successively connected to each other by tubes. A refrigerant circulates through the compressor, the condenser, the expander, and the evaporator via the tubes.

Such an air conditioner includes an indoor unit installed in an indoor space to discharge conditioned air into the indoor space and an outdoor unit connected to the indoor unit through tubes and installed in an outdoor space. A heat exchanger may be provided in each of the outdoor unit and the indoor unit. In detail, the indoor unit includes an indoor heat exchanger, and the outdoor unit includes a compressor and an outdoor heat exchanger.

When the air conditioner performs a cooling operation, the outdoor heat exchanger serves as a condenser, and the indoor heat exchanger serves as an evaporator. Also, when the air conditioner performs a heating operation, the indoor heat exchanger serves as a condenser, and the outdoor heat exchanger serves as an evaporator.

The tubes include a liquid tube through which a condensed liquid refrigerant flows and a gas tube through which an evaporated gas refrigerant flows. The liquid tube and the gas tube are disposed at one side of the heat exchanger to guide introduction of the refrigerant into the indoor heat exchanger or discharge of the refrigerant from the outdoor heat exchanger. For example, when the air conditioner performs the cooling operation, the liquid tube provided in the indoor unit may guide the introduction of the refrigerant into the indoor heat exchanger, and the gas tube may guide the discharge of the gas refrigerant evaporated in the indoor heat exchanger.

Each of the tubes according to the related art is made of a copper (Cu) material. However, there are some limitations with the tubes made of copper.

First, copper has a limitation in reliability due to the occurrence of corrosion.

Next, copper does not have high pressure resistance that is enough to be used as a passage for a high-pressure new refrigerant such as R32. If the tube made of copper is used as the passage for the high-pressure new refrigerant, the tube may not withstand a high pressure with time and thus be damaged.

Also, copper is recognized as a relatively expensive material.

To compensate for disadvantages of such a copper tube, a stainless steel tube is disclosed in Korean Patent Publication No. 10-2003-0074232. The stainless steel tube is made of a stainless steel material. In general, stainless steel materials have higher corrosion resistance than copper materials. Thus, the stainless steel tube may solve the limitation of the copper tube in which corrosion occurs. Also, since the stainless steel material has sufficient high-pressure resistance characteristics, there is less risk of damage at a high pressure.

However, since the stainless steel material has excessively high strength and high hardness properties when compared with the copper material, there is a limitation in processibility or workability, which does not occur in the copper tube.

The tube used in the air conditioner is formed not only in a linear shape, but also in a curved shape due to the spatial restriction. A portion of the tube may be formed in the linear shape, and the other portion may be formed in the curved shape. The linear tube represents a tube having a shape that extends along a straight line in one direction, and the curved tube represents a tube having a shape that is bent along a curved line.

For example, when an installer carries an indoor unit of an air conditioner, the tube connected to the indoor unit is maintained in a bent state. When the indoor unit is installed in an installation space, the tube is straightly spread again and then located in a desired direction according to a structure of the installation space.

If the tube is made of a stainless steel material, it is difficult to bend or spread the tube. Also, although mechanical force is applied to the linear tube made of the stainless steel material to process the linear tube into the curved tube, it is not completely plastic-deformed, but partially elastic-deformed, and thus, the processing is not sufficiently performed.

A distributor for distributing a refrigerant flowing through a liquid tube into various inflow parts may be installed between the liquid tube provided in the indoor unit and the indoor heat exchanger. To locate the liquid tube in the indoor unit having a limited space, the liquid tube connected to an inlet side of the distributor may be disposed to be bent.

In the structure of the liquid tube, when the liquid refrigerant flows through the bent liquid tube, the refrigerant may flows to be concentrated to the outside of the liquid tube by centrifugal force, and thereby to flow into the distributor. Due to this phenomenon, the distributor may be deteriorated in refrigerant distribution performance.

CN 203 083 220 (U) discloses an air-conditioner shunting tube stack which is arranged at the inlet and outlet ends of a heat exchanger of an indoor unit of a heat pump air conditioner according to the preamble of claim 1.

### SUMMARY

A first embodiment of the invention provides an indoor unit for an air conditioner according to claim 1. Preferred embodiments of the invention are provided in the dependent claims. Further preferred embodiments are described in the present disclosure.

Embodiments provide an indoor unit for an air conditioner, which includes a tube made of a relatively inexpensive material while improving limitations in corrosion and pressure resistance property of a copper material.

Embodiments also improve a tube so as to prevent the tube from being deteriorated in processibility or workability by high strength and high hardness properties of a stainless steel material when the tubs are made of the stainless steel material.

Particularly, a tube capable of being easily bent even with relatively small force by an indoor unit installer and has a wrinkle structure may be proposed to provide a tube structure capable of reducing concentration of stress and suppressing pressure drop of a refrigerant.

The object is solved by the features of the independent claims. Preferred embodiments are given in the dependent claims.

Embodiments also provide an indoor unit for an air conditioner, which is capable of obtaining an effect in which a liquid refrigerant is mixed by a wrinkle part of a tube even if the liquid refrigerant is concentrated to the outside when the liquid refrigerant flows through a bent portion of the tube.

Embodiments also provide an indoor unit for an air conditioner, which includes a spiral tube at an inlet side of a distributor to easily mix a liquid refrigerant flowing through the tube.

Embodiments also provide an air conditioner including stainless steel tube having a structure capable of reducing a phenomenon in which vibration occurring in an indoor unit for the air conditioner is transmitted to components of a refrigeration cycle along the tube.

In one embodiment, an indoor unit for an air conditioner is provided, comprising: a case which is installed on a wall of an indoor space and in which a heat exchanger and a fan are provided; and a tube connected to the heat exchanger to guide a flow of a refrigerant and made of a stainless steel material.

Preferably, the tube comprises a first tube body connected to the heat exchanger to extend in a first direction; a wrinkle part connected to the first tube body and bent to extend; and a second tube body connected to the wrinkle part to extend in a second direction.

In one embodiment, the inside of the case comprises a first space part which is defined in a lateral side of the heat exchanger and in which the first tube body is disposed; and a second space part which is defined below the heat exchanger and in which the second tube body is disposed.

In one embodiment, the wrinkle part is disposed in an inner edge region of the case.

In one embodiment, the tube comprises a gas tube through which a gas refrigerant flows and a liquid tube through which a liquid refrigerant flows, and the wrinkle part is provided in each of the gas tube and the liquid tube.

In one embodiment, the indoor unit may comprise a distributor connected to the liquid tube to distribute the refrigerant flowing through the liquid tube into a plurality of inflow parts of the heat exchanger; and a plurality of capillaries extending from the distributor to the plurality of inflow parts.

In one embodiment, the indoor unit may comprise a distribution guide part provided in the liquid tube, the distribution guide part being disposed at an inlet side of the distributor to allow the refrigerant flowing through the liquid tube to be uniformly distributed into the distributor.

In one embodiment, the distribution guide part may comprise a hollow tube having a spiral shape.

In one embodiment, the tube comprises a gas tube through which a gas refrigerant flows and a liquid tube through which a liquid refrigerant flows, and the wrinkle part is provided in the gas tube and is not provided in the liquid tube.

In one embodiment, the gas tube is made of a stainless steel material, and the liquid tube is made of a copper material.

In one embodiment, the indoor unit may further comprise a distribution guide part provided in the liquid tube, the distribution guide part comprising a spiral hollow tube to guide distribution of the refrigerant into a distributor.

In one embodiment, the indoor unit may further comprise a plurality of through covers to cover a through-hole disposed on both side surfaces of the case, the plurality of through covers being selectively removable according to a bending direction of the tube.

In one embodiment, the wrinkle part comprises mountains and valleys, which are alternately repeatedly arranged.

In one embodiment, the first direction is a vertical direction, and the second direction is a horizontal direction.

In one embodiment, the indoor unit may further comprise a support bracket supporting the heat exchanger.

Preferably; the indoor unit may further comprise a first and second brackets protruding forward from the support bracket and provided on both sides of the tube.

The indoor unit may further comprise a tube bracket provided in the second space part to support the tube.

In one embodiment, an indoor unit for an air conditioner includes a tube made of a stainless steel material, and the tube includes a wrinkle part that is bendable.

The tube may include a gas tube having a relatively large outer diameter, and the wrinkle part may be provided in the gas tube.

The tube may include a liquid tube having a relatively small outer diameter, and the wrinkle part may be provided in the liquid tube.

Preferably, the gas tube has a larger diameter than the liquid tube.

A distribution guide part having a spiral shape and guiding mixing or distribution of a liquid refrigerant introduced into a distributor may be provided in the liquid tube, through which a liquid refrigerant flows, of the tube.

The wrinkle part provided in the tube may be integrated with a tube body.

The wrinkle part may be formed by alternately arranging mountains and valleys.

The plurality of mountains and valleys provided in the wrinkle part may be spaced apart from each other.

A support bracket supporting a heat exchanger and a fan motor and first and second brackets protruding from the support bracket may be provided in the case of the indoor unit.

Preferably, a wall thickness of the gas tube in the mountain and a wall thickness in the valley is same or similar.

The details of one or more embodiments are set forth in the accompanying drawings and the description below. Other features will be apparent from the description and drawings, and from the claims.

### BRIEF DESCRIPTION OF THE DRAWINGS

Fig. 1 is a perspective view of an indoor unit according to an embodiment.
Fig. 2 is a front view of the indoor unit from which a front panel is removed according to an embodiment.
Fig. 3 is a rear view of the indoor unit according to an embodiment.
Fig. 4 is an enlarged view of a portion "A" of Fig. 3.
Fig. 5 is a cross-sectional view taken along line V-V' of Fig. 4.
Fig. 6 is an enlarged view of a portion "B" of Fig. 3.
Fig. 7 is a cross-sectional view taken along line VII-VII' of Fig. 6.
Fig. 8 is a view illustrating a state in which a liquid refrigerant flows through a liquid tube according to an embodiment.
Figs. 9 and 10 are views illustrating a portion of the indoor unit according to an embodiment.
Fig. 11 is a rear view of the indoor unit according to an embodiment.
Fig. 12 is a view illustrating that the tube of the indoor unit is bendable in a specific direction according to an embodiment.
Fig. 13 is a view of an indoor unit including a liquid tube according to another embodiment.
Fig. 14 is a view of an indoor unit including a liquid tube according to further another embodiment.

### DETAILED DESCRIPTION OF THE EMBODIMENTS

Reference will now be made in detail to the embodiments of the present disclosure, examples of which are illustrated in the accompanying drawings. The invention may, however, be embodied in many different forms and should not be construed as being limited to the embodiments set forth herein; rather, that alternate embodiments included in other retrogressive inventions or falling within the scope of the present disclosure will fully convey the concept of the invention to those skilled in the art.

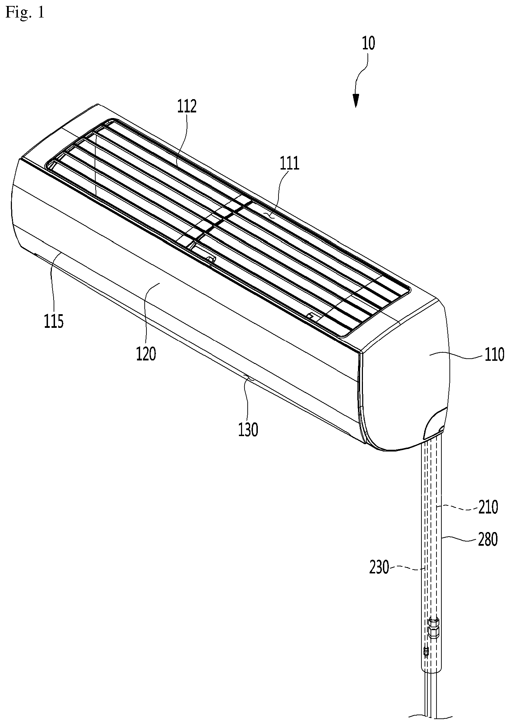

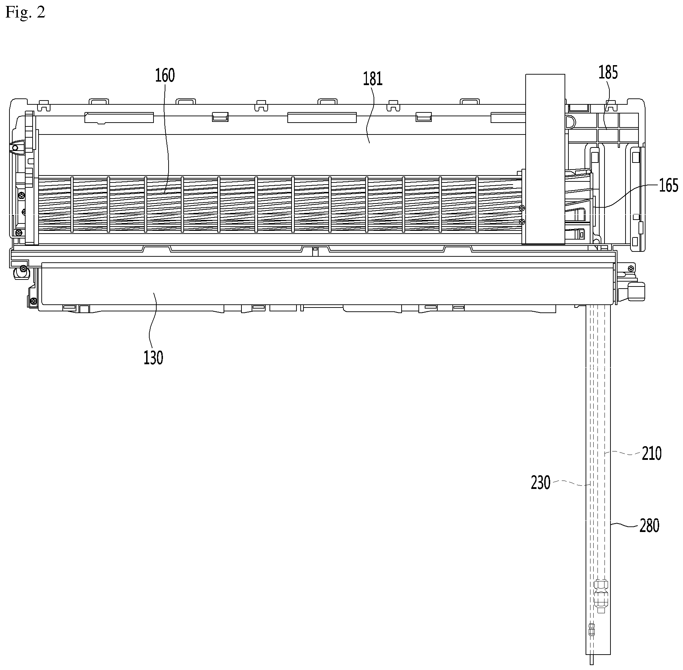

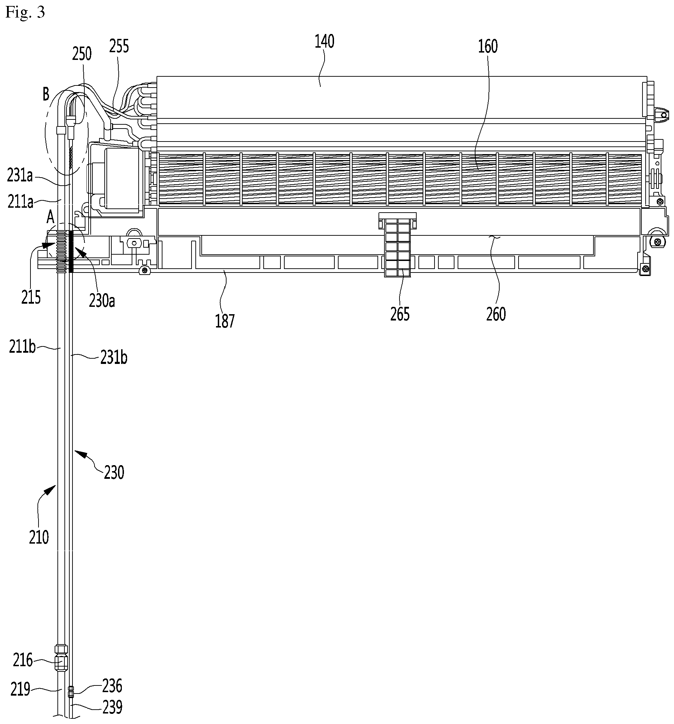

Fig. 1 is a perspective view of an indoor unit according to an embodiment, Fig. 2 is a front view of the indoor unit from which a front panel is removed according to an embodiment, and Fig. 3 is a rear view of the indoor unit according to an embodiment.

### <Constituent of Indoor Unit>

Referring to Figs. 1 to 3, an air conditioner according to an embodiment includes an indoor unit 10 installed in an indoor space. The indoor unit 10 is connected to an outdoor unit (not shown) installed in an outdoor space through a tube. A compressor, an outdoor heat exchanger, an outdoor fan, an expander, and the like of components of a refrigeration cycle may be provided in the outdoor unit, and an indoor heat exchanger and an indoor fan may be provided in the indoor unit.

For example, the indoor unit 10 may include a wall-mount type indoor unit installed on a wall of the indoor space.

### [Case and Front Panel]

The indoor unit 10 includes a case 110 in which a plurality of components constituting the refrigeration cycle are installed. The case 110 includes a front surface of which at least a portion is opened, a rear surface installed on the wall of the indoor space and provided with an installation plate 50, a bottom surface defining a bottom configuration, side surfaces disposed on both sides of the bottom surface, and a top surface defining a top outer appearance.

A front panel 120 is disposed at the front of the opened portion of the front surface. The front panel 120 defines a front outer appearance of the indoor unit 10.

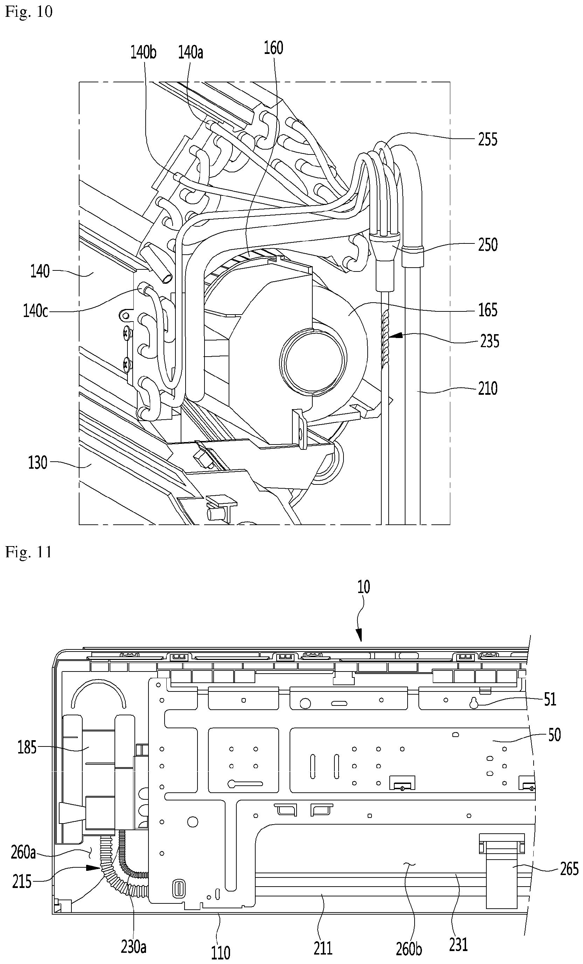

The installation plate 50 (see Fig. 10) is coupled to the rear surface. An installation hole 51 coupled to the wall may be defined in the installation plate 50. For example, the installation plate 50 may be coupled to the wall, and the case 110 may be disposed to be mounted on the installation plate 50.

The case 110 may be an indoor unit case that is disposed in the indoor space in case of a separation type air conditioner and a self-case of the air conditioner in case of an integrated air conditioner. Also, in a broad sense, the front panel 120 may be understood as one component of the case 110.

### [Suction Part and Discharge Part]

The case 110 includes a suction part 111 through which indoor air is introduced and a discharge part 115 through which the air introduced through the suction part 111 is heat-exchanged and then discharged into the indoor space. The suction part 111 may be formed by opening at least a portion of an upper portion of the case 110, and the discharge part 115 may be formed by opening at least a portion of a lower portion of the case 110. Also, a suction grill 112 for preventing foreign substances from being introduced may be disposed on the suction part 111, and a discharge grill may be disposed on the discharge part 115.

### [Discharge Vane]

A discharge vane 130 that is movably disposed to open or close the discharge part 115 is disposed on a side of the discharge part 115. When the discharge vane 130 is opened, air conditioned within the case 110 may be discharged into the indoor space. For example, the discharge vane 130 may be opened by allowing a lower portion of the discharge vane 130 to rotate upward.

### [Heat Exchanger]

The heat exchanger 140 that is heat-exchanged with the air suctioned through the suction part 111 is installed in the case 110. The heat exchanger 140 includes a refrigerant tube through which a refrigerant flows and a heat exchange fin coupled to the refrigerant tube to increase a heat exchange area. The heat exchanger 140 is disposed to surround a suction side of a fan 160. For example, the heat exchanger 140 may include a plurality of heat exchange parts that are bent.

### [Fan and Fan Motor]

A fan 160 is installed in the case 110. For example, the fan 160 may include a cross-flow fan 160 for radially discharging the air suctioned in a circumferential direction. The fan 160 has a shape in which a plurality of blades 165 are arranged along the circumferential direction. Also, the fan 160 extends in a left/right direction in the case 110. Here, an axial direction of the fan 160 may be the left/right direction.

A fan motor 165 is coupled to one side of the fan 160. The fan motor 165 is driven to give rotational force to the fan 160. Also, the other side of the fan 160 may be supported inside the case 110.

### [Bracket]

A bracket supporting a plurality of components constituting the refrigeration cycle may be provided in the case 110. The bracket includes a first support bracket 181 disposed at the rear of the fan 160. For example, the first support bracket 181 may support the heat exchanger 140.

The bracket may further include a motor bracket 185 disposed at a side of the fan 160 to support the fan motor 165. The motor bracket 185 may be configured so that the motor bracket 185 protrudes forward from one side of the first support bracket 181, and the fan motor 165 is inserted into the motor bracket 185.

The bracket further includes a second support bracket 187 disposed at an inner lower portion of the case 110. The second support bracket 187 may be supported by the bottom surface of the case 110. Also, an installation space in which the tube is installed may be defined at the rear of the second support bracket 187.

The first support bracket 181, the motor bracket 185, and the second support bracket 187 may be coupled to each other by using a separate coupling member or be provided as one body. The coupling method of the bracket is not limited to one of the above-described methods.

### [Tube: Liquid Tube and Gas Tube]

Tubes 210 and 230 guiding a flow of the refrigerant may be provided in the indoor unit 10. The tubes 210 and 230 are connected to the heat exchanger 140 to extend to the outside of the case via the inner space of the case 110.

The tubes 210 and 230 include a gas tube 210 guiding a flow of a gas refrigerant and a liquid tube 230 guiding a flow of a liquid refrigerant. The gas tube 210 and the liquid tube 230 may extend in parallel to each other.

An insulator 280 is disposed outside the gas tube 210 and the liquid tube 230. The insulator 280 may have a hollow cylindrical shape to surround the gas tube 210 and the liquid tube 230. The insulator 280 may be called an "insulation tube". The insulator 280 may be provided to prevent heat from being lost from the gas tube 210 and the liquid tube 230. Fig. 3 illustrates a state in which the insulator 280 is removed to show configurations of the gas tube 210 and the liquid tube 230.

Joints 216 and 236 to which the installation tube is connected may be provided in the tubes 210 and 230. The joints 216 and 236 may include a first joint 216 connected to the gas tube 210 and a second joint 236 connected to the liquid tube 230. The installation tube may be a tube connecting the indoor unit 10 to the outdoor unit and include a first installation tube 219 connected to the first joint 216 and a second installation tube 239 connected to the second joint 236.

### [Distributor]

The indoor unit 10 further includes a distributor 250 for branching and introducing the liquid refrigerant flowing through the liquid tube 230 into the heat exchanger 140. The distributor 250 may be installed in the case 110.

For example, the distributor 250 may be disposed between the liquid tube 230 and the heat exchanger 140 with respect to the flow of the liquid refrigerant. In detail, the liquid refrigerant flowing through the liquid tube 230 may be branched into a plurality of passages while passing through the distributor 250, and the branched liquid refrigerant may be introduced into a plurality of inflow parts.

### [Capillary Tube]

The indoor unit 10 further includes a plurality of capillary tubes 255 extending from the distributor 250 to the heat exchanger 140. The plurality of capillary tubes 255 may be disposed in the case 110. The plurality of capillary tubes 255 may be connected to the plurality of inflow parts of the heat exchanger 140.

### [Installation Space of Tube]

The distributor 250 may be disposed in an upper space within the case 110. The tubes 210 and 230 extend downward from the distributor 250. Also, the tubes 210 and 230 may be bent to extend in a left, right, or rear direction.

A space within the case 110, in which the tubes 210 and 230 are disposed, is defined as an installation space part 260. Also, the installation space part 260 may include a first space part 260a (see Fig. 10) defined below the distributor 250 and a second space part 260b (see Fig. 10) defined below the fan 160.

That is, the first space part 260a is understood as a space that is defined in a right direction of the fan 160 and the heat exchanger 140, and the second space part 260b is understood as a space that is defined in a rear lower side of the inner space of the case 110, i.e., a space defined in a rear direction of the second support bracket 187.

The extension of the tubes 210 and 230 in the front direction of the case 110 is restricted in view of an aesthetic point. Thus, it is necessary to bend the tubes 210 and 230 through a bending operation (or processing) in consideration of an installation structure of the indoor space.

For example, when the tubes 210 and 230 are bent to the left, the tubes 210 and 230 may pass through a left surface of the case 110 via the second space part 260b to extend to the outside of the case 110.

A tube bracket 265 supporting the tubes 210 and 230 is disposed in the second space part 260b. In a state in which the tubes 210 and 230 are placed in the second space part 260b, the tube bracket 265 may support rear portions of the tubes 210 and 230.

### [Tube Made of Stainless Steel Material]

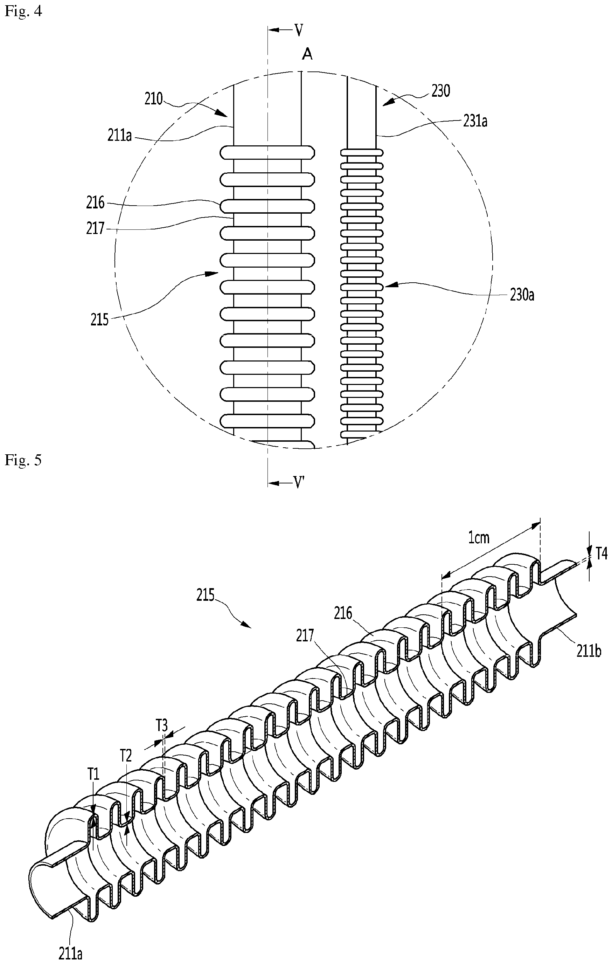

Fig. 4 is an enlarged view of a portion "A" of Fig. 3, and Fig. 5 is a cross-sectional view taken along line V-V' of Fig. 4.

Referring to Figs. 4 and 5, the tubes 210 and 230 according to an embodiment may be made of a stainless steel material. As described in the related art, a copper material is good in flexibility. However, the copper material is susceptible to corrosion, weak in strength, and high in price. Thus, in this embodiment, the tubes 210 and 230, i.e., the gas tube 210 and the liquid tube 230 may be made of the stainless steel material. The tube made of the stainless steel material may have a relatively long lifespan because it has high resistance to corrosion as compared with the tube made of copper.

However, since the stainless steel material has high strength and hardness, it is difficult to perform bending. As described above, when the tubes 210 and 230 are used in the indoor unit 10, it is necessary to bend the tubes 210 and 230 in a specific direction when the indoor unit 10 is installed. Thus, in this embodiment, a wrinkle part may be provided on each of the tubes 210 and 230 so as to facilitate the bending of the tubes 210 and 230.

### [Wrinkle Part of Tube]

The tubes 210 and 230 includes the gas tube 210 having a relatively large diameter and the liquid tube 230 having a diameter less than that of the gas tube 210. The gas tube 210 includes a wrinkle part 215, and the liquid tube 230 includes a wrinkle part 230a.

Since the tubes 210 and 230 are made of the stainless steel material, each of the tubes 210 and 230 may have sufficiently high yield strength of about 200 N/mm2 or more. Thus, even if the wrinkle parts 215 and 230a are processed on the tubes 210 and 230, the tubes 210 and 230 are not damaged. However, in case of the tube made of copper, copper has low yield strength of about 70 N/mm2 or less. Thus, when the wrinkle part is processed on the copper tube, possibility of damage of the copper increases. Thus, in this embodiment, it is meaningful that the tubes 210 and 230 are made of the stainless steel material.

The wrinkle part 215 of the gas tube 210 and the wrinkle part 230a of the liquid tube 230 are bendable. In the state in which the wrinkle parts 215 and 230 are bent, the gas tube 210 and the liquid tube 230 may be installed in the indoor unit 10. The wrinkle parts 215 and 230a may be understood as components that help the worker to easily bend the gas tube 210 and the liquid tube 230.

Also, in case of the liquid tube 230, since the wrinkle part 230a is provided, an effect of mixing the liquid refrigerant by unevenness of an inner surface of the liquid tube 230 may be further expected. That is, the liquid refrigerant may flow to be concentrated to the outside of the liquid tube 230 by centrifugal force while passing through the bent portion of the liquid tube 230. Thus, the wrinkle part 230a may be provided to uniformly mix the liquid refrigerant in the liquid tube 230.

Since the wrinkle part 230a includes constituents similar to those of the wrinkle part 215, the constituents of wrinkle part 215 will be mainly described herein. Also, the description with respect to the wrinkle part 215 may be applied to the wrinkle part 230a.

### [Constituent of Gas Tube]

The gas tube 210 includes a gas tube body 211 having a smooth outer circumferential surface and the wrinkle part 215 disposed on the gas tube body 211 and having a wrinkled shape.

The wrinkle part 215 is integrated with the gas tube body 211 by processing at least a portion of the gas tube 210. The wrinkle part 215 may be formed by using a hydro-forming process. The hydro-forming refers to a process of forming wrinkles by contracting a linear tube in a longitudinal direction by applying a strong water pressure to the linear tube, but by welding various types of unit components after separately processing the unit components by using a press. When the wrinkle part 215 is formed through the hydro-forming process, the wrinkle part 215 is integrated with the gas tube body 211.

As the wrinkle part 215 is integrated with the gas tube body 211, a joint part between the gas tube body 211 and the wrinkle part 215 may be removed. The existence of the joint part means that there is a discontinuity in the tube. As a result, stress may be accumulatively concentrated into the discontinuity. Thus, the joint part may serve as a source of breakage, resulting in poor durability and mechanical reliability of the tube. In this embodiment, as the joint part is removed, the concentration of the stress into the portion at which the wrinkle part 215 is disposed may be prevented.

### [Constituent of Wrinkle Part]

The wrinkle part 215 includes mountains 216 and valleys 217, which are alternately repeatedly arranged. Thus, the wrinkle part 215 may increase in surface area. As a result, the wrinkle part 215 may be easily deformed. Also, transmission of vibration through the gas tube 210 may be reduced.

The plurality of mountains 216 are spaced apart from each other, and also, the plurality of valleys 217 are spaced apart from each other. When the plurality of mountains 216 are spaced apart from each other, and the plurality of valleys 217 are spaced apart from each other, it is possible to form a curved region with only relatively small external force, and there is an advantage in reducing pressure drop and noise generation.

In detail, since the plurality of mountains 216 and the plurality of valleys 217 are alternately arranged, the wrinkle part 215 may be bent with only the relatively small external force. Each of the mountains 216 protrudes along a plane that is perpendicular to the tube 210 in a longitudinal direction to increase a surface area thereof. For example, the installer for the indoor unit 10 work to bend the wrinkle part 215 by applying external force with both hands to decrease or increase a distance between the mountains 216.

A pressure of the refrigerant flowing through the tube may be affected by roughness of the inner circumferential surface of the tube. The more the roughness of the inner circumferential surface increases, the more resistance elements of the refrigerant flow increase. Thus, the vibration and the noise may be reduced due to the increase in flow resistance in the passage. On the other hand, the more the inner circumferential surface is close to the smooth surface, the more the pressure drop decreases to reduce the vibration and the noise.

The fact that an internal cross-section of the tube is not maintained in a correct circular shape means that there are many elements acting as resistors in the refrigerant flow. If there are many elements acting as resistors in the refrigerant flow, the pressure drop and the noise of the refrigerant passing through the tube may occur.

Thus, to reduce the pressure drop and the noise of the refrigerant, the internal cross-section of the tube has to be maintained in the correct circular shape. Whether the internal cross-section of the tube is maintained in the correct circular shape may be evaluated by out-of-roundness. The out-of-roundness refers to a dimension deviating from a geometrically correct circle, e.g., a value obtained by measuring a degree of how far away all points at the same distance from a center deviate from the correct circle.

### [Spaced Structure of Mountain and Valley]

When the mountains 216 and the valleys 217 have the spaced structure as described above, even if external force is applied to the wrinkle part 215 to bend the wrinkle part 215, the out-of-roundness may be suppressed in variation. Thus, a variation in out-of-roundness on the inner circumferential surface of the bent wrinkle part 215 is relatively less. Also, the relatively less variation in out-of-roundness means that the internal cross-section of the tube has a more correct circular shape. Thus, the wrinkle part 215 is effective in reducing the pressure drop and the noise of the refrigerant in the curved region.

For example, the mountains 216 of the gas tube 210 are provided by 2 to 5 per a length of about 1 cm in the longitudinal direction of the gas tube 210. Since the valley 217 is disposed between one mountain 216 and the other mountain 216, when 2 to 5 mountains 216 are provided for each length of about 1 cm, 1 to 4 valleys 217 may be provided for each length of about 1 cm. However, the number of mountains 216 and valleys 217 are merely only an example, and thus, the embodiments are not limited thereto.

If the plurality of mountains 216 and valleys 217 are more densely arranged, the flexibility (bendability) of the tube 210 may increase, and thus, ease of bending work through external force may increase to more improve the effect of reducing the transmission of the vibration and the noise.

### [Thickness of Gas Tube]

The gas tube 210 has a wall thickness T1 in the mountain 216 and a thickness T2 in the valley 217. Also, the gas tube has a wall thickness T3 between the mountain 216 and the valley 217. Also, the gas tube body 211 has a thickness T4. Here, the wall thickness represent a difference between an outer diameter and an inner diameter of the gas tube 210. The wall thickness T4 may vary according to a design. For example, in case of stainless steel material, the gas tube 210 may have sufficient rigidity even with a thickness of about 0.5 cm to about 0.8 cm.

The wall thicknesses T1, T2, and T3 of the wrinkle part 215 and the wall thickness T4 of the gas tube body 211 have a thickness difference of more than about 0% and about 5% or less. For example, if it is assumed that the wrinkle part 215 has a thickness t, the gas tube body 211 has a thickness of about 0.95t to about It. When the wrinkle part 215 is formed, the gas tube 210 may decrease in length by the hydro-forming and thus be thinned. However, when the difference is within about 5%, it means that the wall thickness of the wrinkle part 215 and the wall thickness of the gas tube body 211 are almost constant. The fact that the wall thickness is almost constant means that there is no element acting as a resistor, and thus, the occurrence of the noise and the pressure drop in the gas tube 210 may be suppressed.

Also, the wall thicknesses T1, T2, and T3 may have a wall thickness difference of more than about 0% and about 2% or less. This means that the wall thickness is almost constant at each position of the wrinkle part 215. If the thickness is substantially constant at each position of the wrinkle part 215, resistance on the inner circumferential surface of the wrinkle part 215 may be reduced, and thus, the pressure drop of the refrigerant may be reduced to improve efficiency of the refrigeration cycle. Furthermore, the transmission of the vibration and the noise may be reduced. The reason in which the thicknesses T1 to T4 have substantially constant thicknesses is because the wrinkle part 215 is integrated with the gas tube body 211.

### [Distribution Guide Part of Liquid Tube]

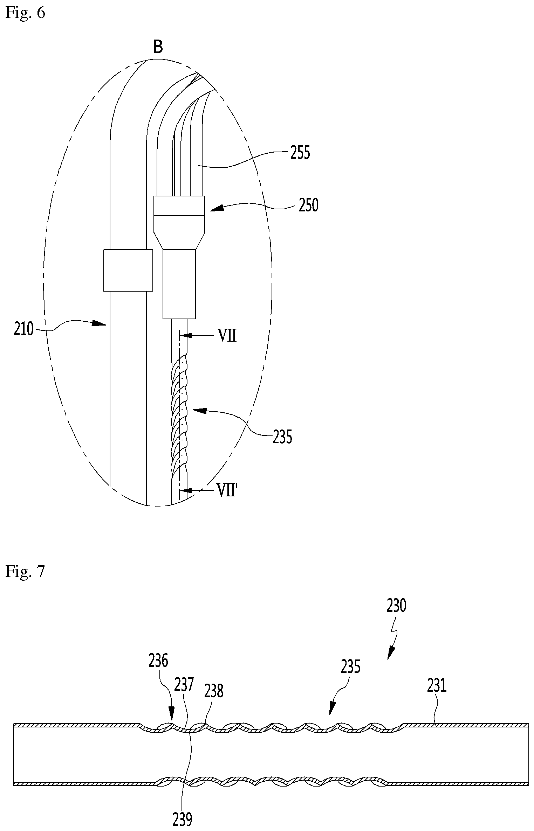

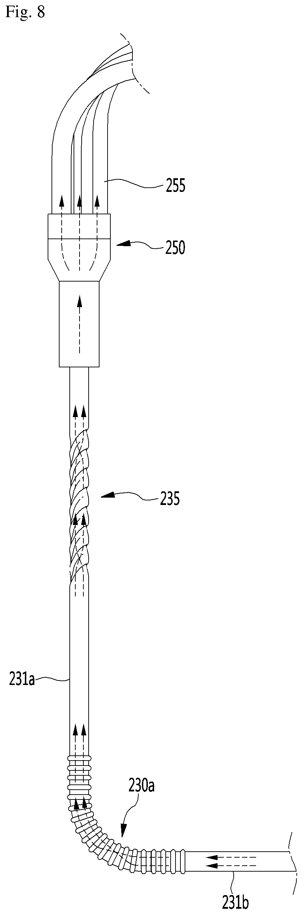

Fig. 6 is an enlarged view of a portion "B" of Fig. 3, Fig. 7 is a cross-sectional view taken along line VII-VII' of Fig. 6, and Fig. 8 is a view illustrating a state in which a liquid refrigerant flows through a liquid tube according to an embodiment.

Referring to Figs. 6 and 7, the liquid tube 230 according to an embodiment further include a liquid tube body 231 having a smooth outer circumferential surface and a distribution guide part 235 extending from the liquid tube body 231 to uniformly distribute the refrigerant to an outlet side of the distributor 250. The distribution guide part 235 may be disposed in a region between the wrinkle part 230a of the liquid tube 230 and the distributor 250. Thus, for example, the liquid refrigerant may pass through the wrinkle part 230a of the liquid tube 230 and then be introduced into the distributor 250 via the distribution guide part 235.

### [Distribution Guide Part Having Spiral Shape]

The distribution guide part 235 may have a spiral shape so that the liquid refrigerant is easily mixed.

In detail, referring to Figs. 6 and 7, the distribution guide part 235 according to an embodiment includes a hollow tube having a spiral shape. That is, an outer circumferential surface of the distribution guide part 235 may have a shape twisted in a predetermined direction and also have an uneven surface.

In detail, the distribution guide part 235 includes an outer circumferential portion 236 defining the outer circumferential surface of the distribution guide part 235 and an inner circumferential portion 239 defining an inner circumferential surface of the distribution guide part 235. The outer circumferential portion 236 includes a plurality of valleys 237 and a plurality of mountains 238. The plurality of valleys 237 and mountains 238 may be alternately arranged.

Each of the plurality of valleys 237 may have a shape that is recessed inward from the distribution guide part 235, and each of the plurality of mountains 238 may have a shape that protrudes outward from the distribution guide part 235.

Also, the inner circumferential portion 239 has a rounded surface or inclined surface by the valleys 237 and the mountains 238 of the outer circumferential portion 236. In detail, the inner circumferential portion 239 has a surface that is rounded or inclined inward by the valleys 237 and a surface that is rounded or inclined outward by the mountains 238.

As described above, since the distribution guide part 235 has the outer and inner circumferential surfaces that are rounded or inclined by the valleys 237 and the mountains 238, flow resistance may act on the refrigerant flowing through the distribution guide part 235, and thus, turbulence may occur to mix the refrigerant. Therefore, the refrigerant may be prevented from flowing to be concentrated to a specific region of the distribution guide part 235.

### [Flow of Liquid Refrigerant in Distribution Guide Part]

Referring to Fig. 8, the liquid tube 230 includes the bent wrinkle part 230a. For example, a first liquid tube body 231a of the liquid tube 230 may vertically extend to be bent at the wrinkle part 230a, and a second liquid tube body 231b of the liquid tube 230 may horizontally extend.

The liquid refrigerant may be concentrated to the outside of the liquid tube 230 by the centrifugal force to pass through the wrinkle part 230a while flowing through the wrinkle part 230a in the second liquid tube body 231b of the liquid tube 230. The wrinkle part 230a may act on the liquid refrigerant as a resistor to cause the mixing effect of the liquid refrigerant.

Also, when the liquid refrigerant passes through the distribution guide part 235 in the first liquid tube body 231a, mixing due to the turbulent flow of the refrigerant may occur in the distribution guide part 235. Thus, the refrigerant may be introduced into the distributor 250 while uniformly flowing in the inner space of the distribution guide part 235.

As a result, the refrigerant may be uniformly distributed into a plurality of capillaries 255 connected to the outlet side of the distributor 250 and then be introduced into the heat exchanger 140. If the refrigerant concentratedly flows into a specific capillary 255 of the plurality of capillaries 255, the refrigerant may be concentrated into the heat exchanger 140 connected to the capillary 255 into which the refrigerant is concentrated to deteriorate heat exchange efficiency of the heat exchanger 140. Thus, this embodiment may solve the abovementioned limitations.

### [Connection between Heat Exchanger and Tube]

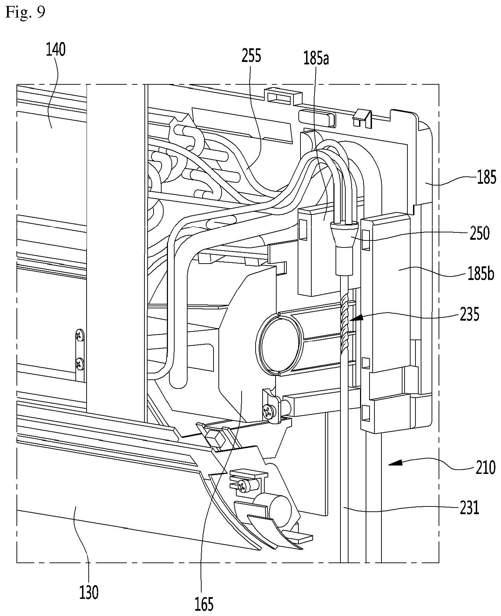

Figs. 9 and 10 are views illustrating a portion of the indoor unit according to an embodiment.

Referring to Figs. 9 and 10, the indoor unit 10 according to an embodiment further include first and second brackets 185a and 185b defining the installation space of the tubes 210 and 230.

The first and second brackets 185a and 185b may be disposed at a side (a right side in Fig. 1) of the first support bracket 181 to protrude from a front surface of the first support bracket 181. For example, the first and second brackets 185a and 185b may be integrated with the first support bracket 181 and the motor bracket 185.

The first and second brackets 185a and 185b may be spaced apart from each other, and the space part in which the tubes 210 and 230 are disposed may be defined between the first and second brackets 185a and 185b. Particularly, the distributor 250 may be disposed in the space part between the first and second brackets 185a and 185b.

As described above, since the liquid tube 230 and the distributor 250 are disposed in the space part and protected by the first and second brackets 185a and 185b, the tubes 210 and 230 and the distributor 250 may be protected again the external impact. In addition, the tubes 210 and 230 and the distributor 250 may be prevented from being separated from the space part due to excessive vibration of the tubes 210 and 230 and the distributor 250 by vibration occurring in the vicinity of the distributor 250.

The heat exchanger 140 includes a plurality of inflow parts 140a, 140b, and 140c connected to the plurality of capillaries 155. The plurality of inflow parts 140a, 140b, and 140c may be disposed on a side surface of the heat exchanger 140 and spaced apart from each other. For example, the plurality of inflow parts 140a, 140b, and 140c include a first inflow part 140a, a second inflow part 140b, and a third inflow part 140c.

When the refrigerant flowing through the liquid tube 230 is distributed by the distributor 250, the distributed refrigerant may be introduced into a plurality of passages of the heat exchanger 140 via the plurality of inflow parts 140a, 140b, and 140c. According to the structure and operation, there is an advantage that a heat exchange area of the heat exchanger 140 is sufficiently utilized.

### [Installation of Tube]

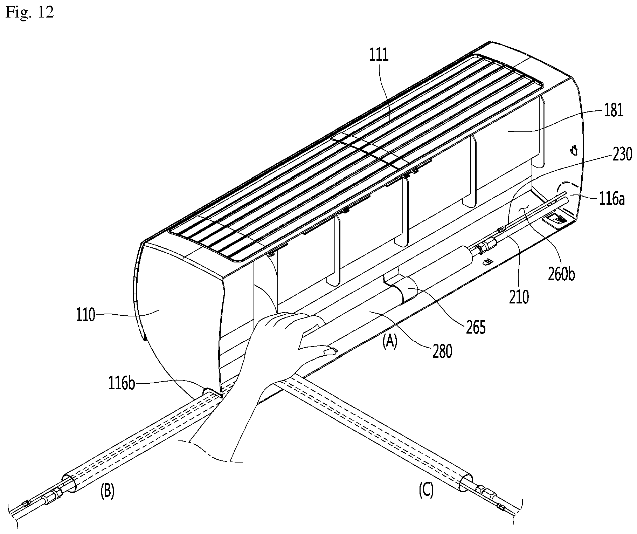

Fig. 11 is a rear view of the indoor unit according to an embodiment, and Fig. 12 is a view illustrating that the tube of the indoor unit is bendable in a specific direction according to an embodiment.

Referring to Fig. 11, the tubes 210 and 230 according to an embodiment may be installed in the indoor unit 10 in a state of being bent. Since each of the tubes 210 and 230 has a relatively long length, whereas the indoor unit 10 has a relatively short length or width, it is necessary to bend the tube 210 and 230.

Installation space parts 260a and 260b in which the tubes 210 and 230 are disposed are defined in the indoor unit 10. The installation space part 260a includes a first space part 260a defined in a side (a right side or a left side) of the heat exchanger 140 and the fan 160. The first space part 260a may be a space in which the motor bracket 185 is disposed and also understood as a space defined below the distributor 250.

The installation space part 260b includes a second space part 260b defined below the heat exchanger 140 and the fan 160. The second space part 260b may be a space in which the tube bracket 265 is disposed. The first space part 260a and the second space part 260b may communicate with each other.

### [Installation Space Part of Tube]

The tubes 210 and 230 are disposed to vertically extend in the first space part 260a and disposed to horizontally extend in the second space part 260b. The tubes 210 and 230 may be bent in a region in which the first space part 260a and the second space part 260b are connected to each other, i.e., a lower edge region of the indoor unit 10.

### [Constituent of Gas Tube]

The gas tube body 211 of the gas tube 210 includes a first gas tube body 211a disposed in the first space part 260a and connected to the heat exchanger 140 to extend vertically and a second gas tube body 211b disposed in the second space part 260b to extend horizontally. Also, the gas tube 210 includes the wrinkle part 215 disposed between the first and second gas tube bodies 211a and 211b, bent laterally from the first gas tube body 211a, and connected to the second gas tube body 211b. The wrinkle part 215 may be disposed in the inner edge region of the case 110 (see Figs. 3 and 4).

As described above, since the gas tube 210 includes the wrinkle part 215, the installer may easily bend the gas tube 210 by applying the external force by using hands thereof.

### [Constituent of Liquid Tube]

The liquid tube body 231 of the liquid tube 230 includes a first liquid tube body 231a disposed in the first space part 260a and connected to the distributor 250 to extend vertically and a second liquid tube body 231b disposed in the second space part 260b to extend horizontally. Also, the liquid tube 230 includes the wrinkle part 230a disposed between the first and second liquid tube bodies 231a and 231b, bent laterally from the first liquid tube body 231a, and connected to the second liquid tube body 231b. The wrinkle part 230a may be disposed in the inner edge region of the case 110 (see Figs. 3 and 4).

As described above, since the liquid tube 210 includes the wrinkle part 230a, the installer may easily bend the liquid tube 210 by applying the external force by using hands thereof. Also, since the unevenness formed on the inner circumferential surface of the wrinkle part 230a acts as a resistor of the liquid refrigerant, the liquid refrigerant may be mixed in the liquid tube 230. As a result, the liquid refrigerant may be prevented from flowing to be concentrated to a specific space in the liquid tube 230.

The gas tube body 211 and the liquid tube body 231 may be collectively called a "tube body".

### [Bending Direction Adjustment of Tube According to Structure of Indoor Space]

Referring to Fig. 12, a bending direction of the tubes 210 and 230 may be determined according to a structure of the indoor space in which the indoor unit 10 is installed, i.e., a position of the wall on which the indoor unit 10 is mounted and a surrounding structure of the wall.

For example, the tubes 210 and 230 may be bent in a direction A corresponding to the configuration illustrated in Fig. 11 and disposed in the second space part 260b. A first through cover 116a that is provided to be separable from the case 110 is disposed on one side surface of the case 110. The first through cover 116a may cover one through-hole of the case 110, through which the tubes 210 and 230 pass.

When the tubes 210 and 230 extend in the direction A, the first through cover 116a may be separated from the case 110. Also, the tubes 210 and 230 may pass through the through-hole of the case 110 to extend to the outside of the case 110 and then be connected to the outdoor unit.

On the other hand, when the tubes 210 and 230 are bent to extend in a direction B, i.e., in a direction opposite to the direction A due to the structure of the indoor space, the tubes 210 and 230 may pass through the other side surface of the case 110 to extend to the outside of the case 110.

A second through cover 116b that is provided to be separable from the case 110 is disposed on the other side surface of the case 110. The second through cover 116b may cover the other through-hole of the case 110, through which the tubes 210 and 230 pass. When the second through cover 116b is separated, the tubes 210 and 230 may pass through the other through-hole to extend to the outside of the case 110.

For another example, the tubes 210 and 230 may be bent to extend to the rear of the indoor unit 10, i.e., in a direction C. In this case, the tubes 210 and 230 extending to the outside of the indoor unit 10 may pass and extend through the wall and be connected to the outdoor unit.

Hereinafter, a description will be made according to another embodiment. Since these embodiments are the same as the abovementioned embodiment except for only portions of the constitutions, different points therebetween will be described principally, and descriptions of the same parts will be denoted by the same reference numerals and descriptions of the abovementioned embodiment.

### <Another Embodiment>

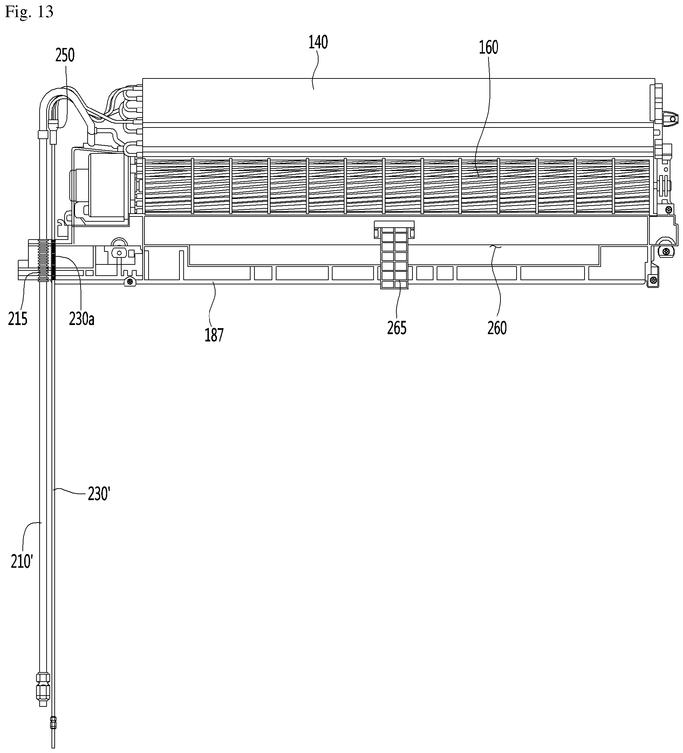

Fig. 13 is a view of an indoor unit including a liquid tube according to another embodiment.

Referring to Fig. 13, an indoor unit 10 according to another embodiment includes tubes 210' and 230' that are bendable. The tubes 210' and 230' include a gas tube 210' through which a gas refrigerant flows and a liquid tube 230' through which a liquid refrigerant flows. The gas tube 210' may have an outer diameter greater than that of the liquid tube 230'. Each of the gas tube 210' and the liquid tube 230' may be made of a stainless steel material.

The gas tube 210' includes a wrinkle part 215 defining a region in which the bending of the gas tube 210' is performed and having wrinkles. Since the wrinkle part 215 is provided, the gas tube 210' having the relatively large outer diameter may be easily bent. Descriptions with respect to wrinkle part 215 may be denoted by those of the wrinkle part 215 according to the abovementioned embodiment.

The liquid tube 230' includes a wrinkle part 230a defining a region in which the bending of the liquid tube 230' is performed and having wrinkles. Since the wrinkle part 230a is provided, when the liquid refrigerant flows through the wrinkle part 230a, an inner surface of the wrinkle part 230a having an uneven shape may act as a resistor with respect to the liquid refrigerant, and thus, turbulence may occur in the liquid refrigerant. Thus, the refrigerant may be mixed to flow over the entire inner space of the wrinkle part 230a.

In the liquid tube 230' according to another embodiment, the distribution guide part 235 described in the abovementioned embodiment may be removed. Even if the distribution guide part 235 is removed, since the wrinkle part 230a is provided, distribution performance of the refrigerant introduced into the distributor 250 may be improved. The wrinkle part 230a may be called another "distribution guide part" in that the wrinkle part 230a facilitates the distribution of the refrigerant introduced into the distributor 250.

### <Further Another Embodiment>

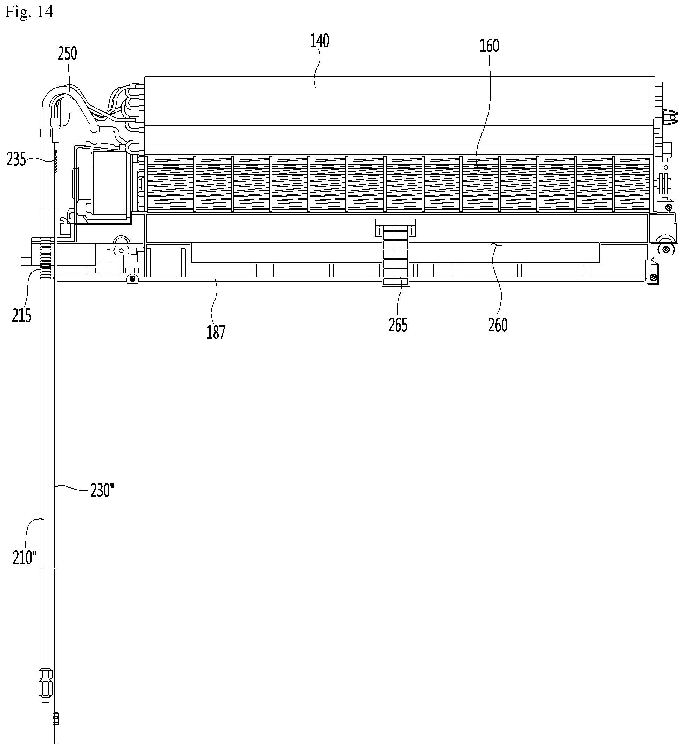

Fig. 14 is a view of an indoor unit including a liquid tube according to further another embodiment.

Referring to Fig. 14, an indoor unit 10 according to further another embodiment includes tubes 210" and 230" that are bendable. The tubes 210" and 230" include a gas tube 210" through which a gas refrigerant flows and a liquid tube 230" through which a liquid refrigerant flows. The gas tube 210" may have an outer diameter greater than that of the liquid tube 230".

The gas tube 210" includes a wrinkle part 215 defining a region in which the bending of the gas tube 210" is performed and having wrinkles. Since the wrinkle part 215 is provided, the gas tube 210" having the relatively large outer diameter may be easily bent. Descriptions with respect to wrinkle part 215 may be denoted by those of the wrinkle part 215 according to the abovementioned embodiment.

A distribution guide part 235a disposed at an inlet side of a distributor 250 to improve distribution performance of a liquid refrigerant introduced into the distributor 250 is provided in the liquid tube 230". The distribution guide part 235a is provided as a spiral hollow tube. Other descriptions with respect to the distribution guide part 235a may be denoted by those of the distribution guide part 235 described in the abovementioned embodiment.

In the liquid tube 230" according to further another embodiment, the wrinkle part 230a described in the abovementioned embodiment may be removed. Even if the wrinkle part 230a is removed, since the distribution guide part 235 is provided, distribution performance of the refrigerant introduced into the distributor 250 may be improved.

The gas tube 210" may be made of a stainless steel material, like the abovementioned embodiment. On the other hand, the liquid tube 230" may be made of a copper material having flexibility superior to the stainless steel material. Since the wrinkle part is not provided in the liquid tube 230", when the liquid tube 230" is made of the stainless steel material, it is difficult to bend the liquid tube 230". Thus, since the liquid tube 230" is made of the copper material, the liquid tube 230" may be easily bent.

According to a first inventive concept, since the tube is made of stainless steel, the heat loss reduction effect and the corrosion resistance performance may be ensured. Also, when compared that the tube is made of copper, the cost reduction effect may increase. Also, since the wrinkle part is provided on the tube, the bending operation may be easily performed.

According to a second inventive concept, since the wrinkle part is provided on the gas tube, which has a relatively large outer diameter, of the tubes, and the gas tube is bendable by using the wrinkle part, when the installer installs the indoor unit, the gas tube may be easily bent in a specific direction according to the structure of the indoor space. Therefore, work convenience may be improved.

According to a third inventive concept, since the wrinkle part is provided on the liquid tube, through which the liquid refrigerant flows, of the tubes, and the liquid tube is bendable by using the wrinkle part, the liquid refrigerant may be mixed while passing through the wrinkle part without being concentrated in one direction. As a result, the distribution performance of the refrigerant may be improved when the liquid refrigerant passes through the distributor via the wrinkle part.

According to a fourth inventive concept, since the distribution guide part having the spiral shape is provided in the liquid tube to mix the liquid refrigerant when the liquid refrigerant passes through the distribution guide part, the liquid refrigerant distribution performance in the distributor may be improved.

According to a fifth inventive concept, since the wrinkle part is integrated with the tube to realize the structure of the jointless wrinkle part, the stress concentration phenomenon occurring in the joint part may be prevented. Also, the transmission of the vibration occurring in the indoor unit to other components of the indoor unit may be reduced.

According to a sixth inventive concept, since the wrinkle part provided on the tube includes the mountains and the valleys, which are densely arranged, the inner circumferential surface of the wrinkle part may be formed close to the smooth surface. Thus, the pressure drop, the vibration, and the noise of the refrigerant, which are caused by the rough and uneven inner circumferential surface, may be prevented.

According to a seventh inventive concept, since the mountains of the wrinkle part are spaced apart from each other, and also, the valleys of the wrinkle part are spaced apart from each other, the wrinkle part may not interrupt the bending of the stainless steel tube. Therefore, in the tube including the wrinkle part having the spiral structure, when compared to a case in which the tube is difficult to be bent, the stainless steel tube according to the embodiments may be easily bent even with relatively small force by the wrinkle part having the spiral structure.

According to an eighth inventive concept, the plurality of components provided in the case of the indoor unit, i.e., the heat exchanger and the fan may be stably supported, and thus, the tube may stably extend.

The above-described indoor unit for the air conditioner is not limited to the constituent and method according to the above mentioned embodiments, but the embodiments can be configured and modified within the scope of the invention which is defined by the appended claims.

## Claims

1. An indoor unit for an air conditioner, comprising:
a case (110) for being installed on a wall of an indoor space and in which a heat exchanger (140) and a fan (160) are provided; and
a tube (210, 230) connected to the heat exchanger (140) to guide a flow of a refrigerant and made of a stainless steel material, wherein the tube (210, 230) comprises:
a first tube body (211a) connected to the heat exchanger (140) to extend in a first direction;
a wrinkle part (215) connected to the first tube body (211a); and
a second tube body (211b) connected to the wrinkle part (215) to extend in a second direction;
wherein the tube (210, 230) comprises a gas tube (210) through which a gas refrigerant flows and a liquid tube (230) through which a liquid refrigerant flows, wherein the gas tube (210) and the liquid tube (230) each comprise a wrinkle part (215, 230a);
a distribution guide part (235) provided in the liquid tube (230), the distribution guide part (235) being disposed at an inlet side of the distributor (250) to allow the refrigerant flowing through the liquid tube (230) to be uniformly distributed into the distributor (250);
the indoor unit being **characterized in that** the distribution guide part (235) comprises a hollow tube having a spiral shape.

2. The indoor unit according to claim 1, wherein the inside of the case comprises:
a first space part (260a) defined in a lateral side of the heat exchanger (140) and in which the first tube body (211a) is disposed; and
a second space part (260b) defined below the heat exchanger (140) and in which the second tube body (211b) is disposed.

3. The indoor unit according to claim 1 or 2, wherein the wrinkle part (215) is disposed in an inner edge region of the case (110).

4. The indoor unit according to any one of claims 1 to 3, further comprising:
a distributor (250) connected to the liquid tube (230) to distribute the refrigerant flowing through the liquid tube (230) into a plurality of inflow parts (140a, 140b, 140c) of the heat exchanger (140); and
a plurality of capillaries (255) extending from the distributor (250) to the plurality of inflow parts (140a, 140b, 140c).

5. The indoor unit according to any one of the preceding claims, wherein the tube (210, 230) comprises a gas tube (210) through which a gas refrigerant flows and a liquid tube (230) through which a liquid refrigerant flows, wherein the wrinkle part (215) is only provided in the gas tube (210).

6. The indoor unit according to claim 5, wherein the gas tube (210) is made of a stainless steel material, and the liquid tube (230) is made of a copper material.

7. The indoor unit according to claim 5 or 6, further comprising a distribution guide part (235) provided in the liquid tube (230), the distribution guide part (235) comprising a spiral hollow tube to guide distribution of the refrigerant into a distributor (250).

8. The indoor unit according to any one of the preceding claims, further comprising a plurality of through covers (116a, 116b) to cover a through-hole disposed on both side surfaces of the case (110), the plurality of through covers (116a, 116b) being selectively removable according to a bending direction of the tube (210, 230).

9. The indoor unit according to any one of the preceding claims, wherein the wrinkle part (215, 230a) comprises mountains and valleys, which are alternately repeatedly arranged.

10. The indoor unit according to any one of the preceding claims, wherein the first direction is a vertical direction, and the second direction is a horizontal direction.

11. The indoor unit according to any one of the preceding claims, further comprising:
a support bracket (181) supporting the heat exchanger (140); and
first and second brackets (185a, 185b) protruding forward from the support bracket (181) and provided on both sides of the tube (210, 230).

12. The indoor unit according to any one of the preceding claims, further comprising a tube bracket (265) provided in the second space part (260b) to support the tube (210, 230).

## Patentansprüche

1. Inneneinheit für eine Klimaanlage, mit:
einem Gehäuse (110), das dazu dient, an einer Wand eines Innenraums installiert zu werden und in dem ein Wärmetauscher (140) und ein Ventilator (160) vorgesehen sind; und einer Leitung (210, 230), die mit dem Wärmetauscher (140) verbunden ist, um einen Fluss eines Kältemittels zu führen, und aus einem Edelstahlmaterial besteht, wobei die Leitung (210, 230) aufweist:
einen ersten Leitungskörper (211a), der mit dem Wärmetauscher (140) verbunden ist, um sich in einer ersten Richtung zu erstrecken;
einen Faltenteil (215), der mit dem ersten Leitungskörper (211a) verbunden ist; und
einen zweiten Leitungskörper (211b), der mit dem Faltenteil (215) verbunden ist, um sich in einer zweiten Richtung zu erstrecken;
wobei die Leitung (210, 230) eine Gasleitung (210), durch die ein gasförmiges Kältemittel strömt und eine Flüssigkeitsleitung (230) aufweist, durch die ein flüssiges Kältemittel fließt, wobei die Gasleitung (210) und die Flüssigkeitsleitung (230) jeweils einen Faltenteil (215, 230a) aufweisen;
einen Verteilungsführungsteil (235), der in der Flüssigkeitsleitung (230) vorgesehen ist, wobei der Verteilungsführungsteil (235) an einer Einlassseite des Verteilers (250) angeordnet ist, um es zu ermöglichen, dass das durch die Flüssigkeitsleitung (230) strömende Kältemittel gleichmäßig im Verteiler (250) verteilt wird;
wobei die Inneneinheit **dadurch gekennzeichnet ist, dass**
der Verteilungsführungsteil (235) eine Hohlleitung mit einer Spiralform aufweist.

2. Inneneinheit nach Anspruch 1, wobei das Innere des Gehäuses aufweist:
einen ersten Raumteil (260a), der in einer lateralen Seite des Wärmetauschers (140) definiert ist und in dem der erste Leitungskörper (211a) angeordnet ist; und
einen zweiten Raumteil (260b), der unter dem Wärmetauscher (140) definiert ist und in dem der zweite Leitungskörper (211b) angeordnet ist.

3. Inneneinheit nach Anspruch 1 oder 2, wobei der Faltenteil (215) in einem Innenkantenbereich des Gehäuses (110) angeordnet ist.

4. Inneneinheit nach einem der Ansprüche 1 bis 3, die ferner aufweist:
einen Verteiler (250), der mit der Flüssigkeitsleitung (230) verbunden ist, um das durch die Flüssigkeitsleitung (230) strömende Kältemittel in mehrere Zulaufteile (140a, 140b, 140c) des Wärmetauschers (140) zu verteilen; und
mehrere Kapillaren (255), die sich vom Verteiler (250) zu den mehreren Zulaufteilen (140a, 140b, 140c) erstrecken.

5. Inneneinheit nach einem der vorhergehenden Ansprüche, wobei die Leitung (210, 230) eine Gasleitung (210), durch die ein gasförmiges Kältemittel strömt und eine Flüssigkeitsleitung (230) aufweist, durch die ein flüssiges Kältemittel fließt, wobei der Faltenteil (215) nur in der Gasleitung (210) vorgesehen ist.

6. Inneneinheit nach Anspruch 5, wobei die Gasleitung (210) aus einem Edelstahlmaterial besteht und die Flüssigkeitsleitung (230) aus einem Kupfermaterial besteht.

7. Inneneinheit nach Anspruch 5 oder 6, die ferner einen Verteilungsführungsteil (235) aufweist, der in der Flüssigkeitsleitung (230) vorgesehen ist, wobei der Verteilungsführungsteil (235) eine Spiralhohlleitung aufweist, um die Verteilung des Kältemittels in einen Verteiler (250) zu führen.

8. Inneneinheit nach einem der vorhergehenden Ansprüche, die ferner mehrere Durchgangsabdeckungen (116a, 116b) aufweist, um ein Durchgangsloch abzudecken, das an beiden Seitenflächen des Gehäuses (110) angeordnet ist, wobei die mehreren Durchgangsabdeckungen (116a, 116b) gemäß einer Biegerichtung der Leitung (210, 230) selektiv entfernbar sind.

9. Inneneinheit nach einem der vorhergehenden Ansprüche, wobei der Faltenteil (215, 230a) Berge und Täler aufweist, die abwechselnd wiederholt angeordnet sind.

10. Inneneinheit nach einem der vorhergehenden Ansprüche, wobei die erste Richtung eine vertikale Richtung ist und die zweite Richtung eine horizontale Richtung ist.

11. Inneneinheit nach einem der vorhergehenden Ansprüche, die ferner aufweist:
eine Winkelstütze (181), die den Wärmetauscher (140) hält; und
erste und zweite Halterungen (185a, 185b), die nach vorn aus der Winkelstütze (181) vorstehen und auf beiden Seiten der Leitung (210, 230) vorgesehen sind.

12. Inneneinheit nach einem der vorhergehenden Ansprüche, die ferner eine Leitungshalterung (265) aufweist, die im zweiten Raumteil (260b) vorgesehen ist, um die Leitung (210, 230) zu halten.

## Revendications

1. Unité intérieure pour un climatiseur, comprenant :
un boîtier (110) destine à être installé sur un mur d'un local intérieur et dans lequel sont prévus un échangeur de chaleur (140) et un ventilateur (160) ; et
un tuyau (210, 230) raccordé à l'échangeur de chaleur (140) pour conduire un flux de réfrigérant, et réalisé en acier inoxydable, ledit tuyau (210, 230) comprenant :
un premier corps (211a) de tuyau raccordé à l'échangeur de chaleur (140) pour s'étendre dans une première direction ;
une partie ondulée (215) raccordée au premier corps (211a) de tuyau ; et
un deuxième corps (211b) de tuyau raccordé à la partie ondulée (215) pour s'étendre dans une deuxième direction ;
où le tuyau (210, 230) comprend un tuyau de gaz (210) où circule un réfrigérant gazeux et un tuyau de liquide (230) où circule un réfrigérant liquide, le tuyau de gaz (210) et le tuyau de liquide (230) présentant chacun une partie ondulée (215, 230a) ;
une section de guidage de distribution (235) prévue dans le tuyau de liquide (230), ladite section de guidage de distribution (235) étant présentée sur un côté d'entrée du distributeur (250) pour permettre une répartition homogène dans le distributeur (250) du réfrigérant circulant dans le tuyau de liquide (230) ;
ladite unité intérieure étant **caractérisée en ce que**
le section de guidage de distribution (235) comprend un tuyau creux de forme hélicoïdale.

2. Unité intérieure selon la revendication 1, où l'intérieur du boîtier comprend :
un premier espace (260a) défini dans un côté latéral de l'échangeur de chaleur (140) et où est disposé le premier corps (211a) de tuyau ; et
un deuxième espace (260b) défini sous l'échangeur de chaleur (140) et où est disposé le deuxième corps (211b) de tuyau.

3. Unité intérieure selon la revendication 1 ou la revendication 2, où la partie ondulée (215) est présentée dans une zone de bord intérieur du boîtier (110).

4. Unité intérieure selon l'une des revendications 1 à 3, comprenant en outre :
un distributeur (250) raccordé au tuyau de liquide (230) pour diviser le réfrigérant circulant dans le tuyau de liquide (230) en une pluralité de parties d'admission (140a, 140b, 140c) de l'échangeur de chaleur (140) ; et
une pluralité de capillaires (255) s'étendant depuis le distributeur (250) vers la pluralité de parties d'admission (140a, 140b, 140c).

5. Unité intérieure selon l'une des revendications précédentes, où le tuyau (210, 230) comprend un tuyau de gaz (210) où circule un réfrigérant gazeux et un tuyau de liquide (230) où circule un réfrigérant liquide, la partie ondulée (215) n'étant prévue que sur le tuyau de gaz (210).

6. Unité intérieure selon la revendication 5, où le tuyau de gaz (210) est réalisé en acier inoxydable, et le tuyau de liquide (230) est réalisé en cuivre.

7. Unité intérieure selon la revendication 5 ou la revendication 6, comprenant en outre une section de guidage de distribution (235) prévue dans le tuyau de liquide (230), ladite section de guidage de distribution (235) comprenant un tuyau creux hélicoïdale pour permettre la répartition du réfrigérant dans un distributeur (250).

8. Unité intérieure selon l'une des revendications précédentes, comprenant en outre une pluralité de couvercles de traversée (116a, 116b) destinés à obturer un trou traversant présenté sur les deux surfaces latérales du boîtier (110), ladite pluralité de couvercles de traversée (116a, 116b) étant sélectivement amovible en fonction d'une direction de flexion du tuyau (210, 230).

9. Unité intérieure selon l'une des revendications précédentes, où la partie ondulée (215, 230a) comprend des creux et des bosses agencés de manière répétée et alternée.

10. Unité intérieure selon l'une des revendications précédentes, où la première direction est une direction verticale, et la deuxième direction une direction horizontale.

11. Unité intérieure selon l'une des revendications précédentes, comprenant en outre :
une console de support (181) supportant l'échangeur de chaleur (140) ; et
un premier et un deuxième supports (185a, 185b) en saillie vers l'avant depuis la console de support (181) et prévus de part et d'autre du tuyau (210, 230).

12. Unité intérieure selon l'une des revendications précédentes, comprenant en outre un support (265) de tuyau prévu dans le deuxième espace (260b) pour supporter le tuyau (210, 230).
